# EUROPÄISCHE PATENTSCHRIFT

(11) **EP 0 928 532 B1**
(45) Veröffentlichungstag und Bekanntmachung des Hinweises auf die Patenterteilung: **20.02.2002**
(21) Anmeldenummer: 97941843.1
(22) Anmeldetag: 28.08.1997
(51) Int. Cl.: H04M 1/27, G10L 15/00

(54) **VERFAHREN ZUM EINSTELLEN VON ENDGERÄTESPEZIFISCHEN PARAMETERN EINES KOMMUNIKATIONSENDGERÄTS**
METHOD FOR SETTING TERMINAL SPECIFIC PARAMETERS OF A COMMUNICATION TERMINAL
PROCEDE SERVANT A REGLER LES PARAMETRES SPECIFIQUES D'UN TERMINAL DE TELECOMMUNICATIONS

(30) Priorität: 18.09.1996 DE 19638114
(43) Veröffentlichungstag der Anmeldung: 14.07.1999
(73) Patentinhaber: SIEMENS AKTIENGESELLSCHAFT, 80333 München (DE)
(72) Erfinder: SCHLIWA, Peter, D-46499 Hamminkeln (DE)
(86) Internationale Anmeldenummer: DE9701877
(87) Internationale Veröffentlichungsnummer: WO9812857

(56) Entgegenhaltungen:
- EP-A- 0 618 710
- EP-A- 0 676 882
- US-A- 4 439 638
- US-A- 5 335 261

## Beschreibung

Die vorliegende Erfindung betrifft ein Verfahren zum Einstellen von endgerätespezifischen Parametern eines Kommunikationsendgeräts durch eine Bedienperson.

Bei bekannten Verfahren gibt die Bedienperson über eine Tastatur des Endgeräts eine Zeichenfolge ein, um den Änderungszustand für einen bestimmten Parameter zu erreichen, woraufhin eine Steuereinrichtung abhängig von weiteren Tastenbetätigungen bestimmte, diesen Tastenbetätigungen zugeordnete Parametereinstellungen vornimmt. Bei einigen Kommunikationsendgeräten wird die Bedienperson hierbei nur durch ein Benutzerhandbuch unterstützt, aus dem sie die Tastenbetätigungsfolge für das Einstellen eines endgerätespezifischen Parameters entnehmen kann. Andere Kommunikationsendgeräte mit Anzeigeeinrichtung ermöglichen eine menügeführte Einstellung endgerätespezifischer Parameter durch Anzeigen des jeweiligen aktuellen Zustandes der Steuereinrichtung oder durch Auffordern zum Betätigen gewünschter Tasten mit Hilfe einer alphanumerischen Anzeige. Auch bei solchen Endgeräten mit Anzeigeeinrichtung ist die Bedienperson jedoch aufgrund der Vielzahl der menügesteuert einstellbaren, aktivierbaren oder deaktivierbaren Funktionen, Leistungsmerkmale und Parameter von einem Benutzerhandbuch abhängig, um in eine gewünschte Menüebene zum Einstellen von endgerätespezifischen Parametern zu gelangen.

Es sind bereits Kommunikationsendgeräte bekannt, bei denen spezielle Funktionen wie das Aktivieren von Leistungsmerkmalen oder das Ausgeben von Rufnummern mit Hilfe von Spracherkennungseinrichtungen per Sprachbefehl steuerbar sind.

So ist aus der Zeitschrift Elektrisches Nachrichtenwesen, Bd. 59, Nr. 3, 1985 aus dem Aufsatz "Spracherkennung und Sprachsynthese fur Dienste von Nebenstellenanlagen", H. Mulla, J. F. Vaughan, Seiten 273 bis 280 eine Nebenstellenanlage bekannt, die einen sprachgesteuerten Wahlruf ermöglicht. Hier ist insbesondere das sprachgesteuerte Aufrufen von Leistungsmerkmalen wie "Umlegen", "Dreierkonferenz", "Halten" und "automatischer Rückruf" beschrieben. In derselben Zeitschrift ist in dem Artikel "Sprachgesteuerter Rufnummerngeber", M. Immendörfer, Seiten 281 bis 285, eine Einrichtung beschrieben, die zusätzlich zu einem Telefon an eine Telefonanlage anschließbar ist, um einen sprachgesteuerten Wahlvorgang zu ermöglichen und einige benutzerfreundliche Funktionsmerkmale, wie z.B. das Leistungsmerkmal "Wahlwiederholung" zu aktivieren.

Aus der US 5,335,261 ist ferner ein Funktelefon mit einer Spracherkennungseinrichtung zum Auswerten von durch Sprache eingegebener Wahlinformation und zum Ausgeben dieser Wahlinformation bekannt.

Die EP 0 194 387 A2 beschreibt weiterhin ein sprachgesteuertes Telefon zum sprachgesteuerten Ausgeben einer Rufnummer, wobei bei einer bevorzugten Ausgestaltungsform die Funktionsweise einer Spracherkennungseinrichtung und der Trainingsvorgang zum Anpassen der Referenzmuster der Spracherkennungseinrichtung an die spezifische Aussprache einer Bedienperson im Detail beschrieben sind.

Aus der DE-36 08 497 A1 ist ein Verfahren zum Aufbau einer Fernsprechverbindung über eine Bedienungseinrichtung eines Fernmeldeendgerätes, insbesondere eines Autotelefons bekannt, bei dem ein Benutzer ein gewünschtes Wahlziel akustisch durch Wörter und/oder Ziffern über ein Mikrofon der Bedienungseinrichtung eingibt, in der Bedienungseinrichtung die akustische Eingabe ausgewertet wird, in der Bedienungseinrichtung dem Auswerteergebnis eine Fernsprechverbindung aufgebaut wird und eine synthetisch erzeugte Sprachausgabe über einen Lautsprecher der Bedienungseinrichtung zur akustischen Benutzerführung erfolgt. Darüber hinaus ist es bekannt, daß die Bedienungseinrichtung durch das Abheben eines Handapparates oder durch Einsprechen eines Einschalt-Kommandowortes über ein in Bereitschaft geschaltetes, separates Mikrofon aktiviert wird, daß der Benutzer über den Lautsprecher zur Eingabe des Wahlziels aufgefordert wird, daß nach akustischer Eingabe des Wahlziels eine Auswertung in einer Spracherkennungs- und Sprachsyntheseeinheit der Bedienungseinrichtung erfolgt, daß ein erkanntes Wahlziel dem Benutzer akustisch bestätigt wird und daß nach einer vorgebbaren Vorlaufzeit ein automatischer Verbindungsaufbau erfolgt, falls nicht innerhalb der Vorlaufzeit der Benutzer durch akustische Eingabe eines Korrektur-Kommandowortes oder durch das Auflegen des Handapparates eine Unterbrechung herbeiführt. Außerdem ist es vorgesehen, daß ein Benutzer zum Einspeichern von Wahlzielen durch akustische Eingabe eines Einspeicher-Kommandowortes die Spracherkennungs- und Sprachsyntheseeinheit in einen Einspeichermodus steuert, daß der Einspeichermodus akustisch bestätigt und der Benutzer aufgefordert wird, eine Speicherplatznummer einzugeben, daß die eingegebene Speicherplatznummer akustisch bestätigt wird, daß der Benutzer akustisch aufgefordert wird, den Teilnehmernamen einzusprechen, daß nach erfolgtem Einsprechen des Teilnehmernamens der Benutzer zum Eingeben der zugehörigen Rufnummer akustisch aufgefordert wird, daß nach Eingabe der Rufnummer der Benutzer erneut akustisch aufgefordert wird, den Teilnehmernamen einzusprechen, um einen Erkennungstest ablaufen zu lassen, das dem Benutzer eine korrekte Erkennung akustisch bestätigt, das Wahlziel akustisch wiederholt und nach erfolgter akustischer Bestätigung durch den Benutzer unter der angegebenen Speicherplatznummer abgespeichert wird und daß nach akustischer Eingabe eines Ende-Kommandowortes der Einspeichermodus abgeschaltet wird.

Aus DE-94 15 045 U1 ist ein Telefonapparat bekannt, bei dem es dem Benutzer ermöglicht wird, ein ankommendes Gespräch auch von einem räumlich vom Telefonapparat entfernten Platz aus anzunehmen, in dem eine dem Telefonapparat zugeordnete Freispeicheinrichtung durch das Eingeben von Sprache, vorzugsweise durch das Sprechen eines zuvor festgelegten Code-Wortes, fernbetatigt wird.

Aus EP-0 194 387 A2 ist ein sprachgesteuertes Telefon bekannt, das in der Lage ist, die Sprache des Benutzers durch visuelles Darstellen der vom Benutzer in Form von Wörtern und Zahlen gesprochenen Sprachbefehle zu lernen. Darüber hinaus kann der Benutzer des Telefons die Namen und Rufnummern von haufig anzuwählenden Personen speichern. Wenn eine solche Person angerufen werden soll, dann spricht der Benutzer des Telefons lediglich den entsprechenden Namen der anzurufenden Person und ein Wählkommando. Für dieses sprachgesteuerte Wählen weist das Telefon in einer ersten Ausführungsform eine spezielle Spracherkennungsschaltung und eine separate Steuerungseinrichtung sowie in einer weiteren Ausführungsform eine Freisprechanordnung mit einer mikroprozessorgesteuerten Spracherkennung und einer Telefonsteuerung auf. Für einen einwandfreien sprachgesteuerten Betrieb werden in dem Telefon die von dem Benutzer eingegebenen Sprachsequenzen mit gespeicherten Referenzmustern (Sprachschablonen) verglichen, bevor die zu der Sprachsequenz gehörende gespeicherte Rufnummer nach der Eingabe eines Wählkommandos gewählt wird.

Aus der US-4,439,638 ist ein funktionserzeugendes System mit einem geräuschaktivierten Steuersystem für Telefone bekannt, bei dem in Form einer Rückführanordnung eine Wechselwirkung zwischen dem Anrufer und dem Empfänger vorgesehen ist. Die einzige hierbei vorzunehmende Handlung ist die Erzeugung von Geräuschen in Form von Ziffern oder anderen Symbolen am Empfangsende und von Antwortziffern oder anderen Symbolen am Anruferende. Hierdurch wird das System vollständig unabhängig von Drucktasten oder Wählscheiben. Dadurch ist es insbesondere möglich, die Verwendung dieser Tasten oder Wählscheiben nicht nur an den Anrufs- und Empfangsapparaten sondern auch an den Vermittlungsstellen zu vermeiden. In den Vermittlungsstellen würde sogar eine Bedienperson nicht mehr nötig sein, weil die Stimme oder ein anderes Geräusch am Anrufende das System direkt auslösen würde.

Aufgabe der vorliegenden Erfindung ist es, ein Verfahren zum Einstellen endgerätespezifischer Parameter eines Kommunikationsendgerätes anzugeben, das auf einfache Weise zu bedienen ist und zuverlässig arbeitet.

Diese Aufgabe löst die Erfindung durch ein Verfahren mit den im Anspruch 1 angegebenen Verfahrensschritten. Vorteilhafte Weiterbildungen der Erfindung sind in den Unteransprüchen 2 bis 23 angegeben.

Darüber hinaus soll ein Verfahren zum bequemen Anmelden eines mobilen Kommunikationsendgeräts an einer Basisstation einer Kommunikationsanlage angegeben werden. Ein entsprechendes Verfahren hat die im Anspruch 24 wiedergegebenen Verfahrensschritte und kann beispielsweise gemäß Anspruch 25 weitergebildet sein.

Das Verfahren gemäß Anspruch 1 erfordert eine Spracherkennungseinrichtung zum Umsetzen akustischer Signale in eine Datenfolge und zum Erkennen einer Übereinstimmung mindestens eines Teils dieser Datenfolge mit mindestens einem Referenzmuster, das einem bestimmten Sprachbefehl entspricht.

Eine solche Spracherkennungseinrichtung kann beispielsweise durch Betätigen einer Taste oder eines Schalters am Endgerät aktiviert werden. Sie kann aber auch automatisch durch Erreichen eines bestimmten vermittlungstechnischen Zustandes wie z.B. "kommender Ruf" oder "Leitungsbelegung" aktiviert werden. Beim Aktivieren einer derartigen Spracherkennungseinrichtung wird beispielsweise ein Sprachsignalübertragungspfad von einem Handapparatmikrofon oder von einem Freisprechmikrofon bis zu einem Codierer/Decodierer aktiviert, und in das Mikrofon eingegebene Schallwellen werden in ein analoges elektrisches Signal umgewandelt und in eine Folge von digitalen Datenwörtern transformiert. Aus diesen Informationen bestimmt beispielsweise eine Erkennungseinrichtung die für die Erkennung relevanten Sprachparameter. Diese können dann unter Anwendung eines Klassifikationsverfahrens mit gespeicherten Referenzmustern verglichen werden, wobei beispielsweise ein Ähnlichkeitsmaß ermittelt und eine Entscheidung über ausreichend große Ähnlichkeit der Sprachparameter eines eingegebenen Sprachbefehls mit den Referenzmuster-Sprachparametern getroffen wird. Abhängig von einer festgestellten Übereinstimmung kann dann von einer Steuereinrichtung, wie z.B. einem Mikroprozessor, mit entsprechendem Steuerprogramm eine bestimmte, dem Sprachbefehl gegebenenfalls in Abhängigkeit von irgendwelchen Randbedingungen fest zugeordnete Aktion veranlaßt werden.

Erfindungsgemäß wird nach dem Aktivieren einer Spracherkennungseinrichtung durch eine Bedienperson ein Sprachbefehl eingegeben und die Spracherkennungseinrichtung ermittelt die Übereinstimmung dieses Sprachbefehls mit einem dem bestimmten, endgerätespezifischen Parameter zugeordneten Sprachbefehl. Liegt eine Übereinstimmung zwischen dem eingegebenen Sprachbefehl und dem dem bestimmten Parameter zugeordneten Sprachbefehl vor, so wird ein Einstellmodus für diesen Parameter durch die Steuereinrichtung aktiviert.

Eine solche Steuereinrichtung ist vorzugsweise im Kommunikationsendgerät enthalten; sie kann jedoch auch als Zusatzgerät, gegebenenfalls über den Kommunikations- bzw. Signalisierungspfad des Endgerätes, mit diesem gekoppelt sein.

Wenn die Steuereinrichtung einen Einstellmodus für einen Parameter aktiviert, gibt das Endgerät einen wahrnehmbaren Hinweis über diesen aktivierten Einstellmodus ab oder fordert die Bedienperson wahrnehmbar zur Eingabe einer gewünschten Parametereinstellung auf. Dieser wahrnehmbare Hinweis kann beispielsweise durch Ausgabe einer oder mehrerer gespeicherter Sprachphrasen und/oder durch Anzeigen auf einer alphanumerischen oder einer Symbole darstellenden Arzeigeeinrichtung erfolgen. Bei Anzeige dieses Hinweises kann vorzugsweise zusätzlich ein akustisches Signal abgegeben werden.

Nach dem Aktivieren eines Einstellmodus für einen Parameter wird eine gewünschte Parametereinstellung durch die Bedienperson eingegeben, woraufhin die Steuereinrichtung diese Parametereinstellung für das Endgerät einstellt. Die Eingabe einer gewünschten Parametereinstellung kann hierbei z.B. per Tastatur oder durch Spracheingabe vorgesehen sein.

Die Bedienperson deaktiviert in einer Weiterbildung der Erfindung durch Eingabe eines Endebefehls den Einstellmodus. Hierbei kann auch das Einstellen einer gewünschten, eingegebenen Parametereinstellung durch die Steuereinrichtung abhängig von der Eingabe dieses Endebefehls vorgenommen werden. Ein solcher Endebefehl kann beispielsweise durch Drücken einer Stern-Taste oder einer Quadrat-Taste am Endgerät erfolgen. Der Endebefehl kann jedoch auch durch Spracheingabe eines bestimmten Sprachbefehls wie z.B. "Stopp", "Ende" oder ähnlich erfolgen.

Es kann in Ausgestaltungen der Erfindung vorgesehen sein, daß nur Referenzmuster für eine sehr begrenzte Anzahl von Sprachbefehlen gespeichert vorliegen. Dies ist insbesondere bei Speicherung im Endgerät empfehlenswert.

Diese begrenzte Anzahl kann beispielsweise aus bestimmten Wörter zum Ausdrücken von Zustimmung oder Ablehnung wie z.B. "Ja" und "Nein" oder "Yes" und "No" bestehen oder aber aus ganz bestimmten Buchstaben oder Ziffern.

In diesem Fall kann in einer Weiterbildung eines erfindungsgemäßen Verfahrens das Endgerät vor der Eingabe des Sprachbefehls einen wahrnehmbaren Hinweis über einen bestimmten, endgerätespezifischen Parameter abgeben, dessen Einstellmodus durch Eingabe eines ersten, bestimmten Sprachbefehls (z.B. "Ja") aktivierbar ist. In einer Weiterbildung dieses Verfahrens kann dann das Endgerät abhängig von der Eingabe eines zweiten, bestimmten Sprachbefehls (z.B. "Nein") einen wahrnehmbaren Hinweis über einen anderen endgerätespezifischen Parameter abgeben, dessen Einstellmodus durch Eingabe des ersten bestimmten Sprachbefehls aktivierbar ist.

In einer weiteren Ausgestaltungsform des Verfahrens kann das Endgerät vor Eingabe des Sprachbefehls einen wahrnehmbaren Hinweis über mehrere bestimmte, endgerätespezifische Parameter abgeben sowie über diesen Parametern jeweils zugeordnete Sprachbefehle, durch deren Eingabe jeweils der Einstellmodus für den zugeordneten Parameter aktivierbar ist. So kann die Bedienperson beispielsweise per Anzeige oder Ansage aufgefordert werden, zum Aktivieren eines Änderungsmodus für einen ersten Parameter einen ersten Steuerbefehl einzugeben, zum Aktivieren eines Änderungsmodus für einen zweiten Parameter einen zweiten Steuerbefehl einzugeben, zum Aktivieren eines Einstellmodus für einen dritten Parameter einen dritten Steuerbefehl einzugeben usw.

Als einstellbarer Parameter kann bei einer Weiterbildung der Erfindung beispielsweise der Kontrast einer Anzeigeeinheit des Endgerätes vorgesehen sein. In diesem Falle kann als eingebbare Parametereinstellung eine von mehreren Kontraststufen vorgesehen sein.

Außerdem konnen mit Hilfe weiterer Verfahrensschritte beispielsweise die Parameter Lautstärke des Tonrufs des Endgerätes, Melodie des Tonrufs oder das Wahlverfahren des Endgerates vorteilhaft eingestellt werden. Ein weiterer einstellbarer Parameter ist die Zuordnung des Endgerätes zu einem Teilnehmer. In bekannten Nebenstellenanlagen kann ein Endgerät einem Teilnehmer zugeordnet werden, indem eine Eingabe einer bestimmten längeren Tastenfolge und darauffolgendes Eingeben einer persönlichen Identifikationsnummer eines Teilnehmers (PIN) erfolgt. Bei Verwendung des erfindungsgemäßen Verfahrens wird der Änderungszustand für die Zuordnung des Endgerates zu einem Teilnehmer durch Eingabe eines Sprachbefehls erreicht, woraufhin dann als gewünschte Parametereinstellung beispielsweise die persönliche Identifikationsnummer des Teilnehmers vorgesehen sein kann. Im übrigen kann das Endgerät auch, falls es sich in einem gesperrten Zustand befindet, den es nur nach Eingabe einer Identifikationsnummer wieder verlassen kann, durch Eingabe eines entsprechend zugeordneten Sprachbefehls in den Eingabezustand zum Eingeben der Identifikationsnummer versetzt werden.

Ein weiterer Anwendungsfall für die Erfindung ist das Eingeben einer Rufnummer in einen Rufnummernspeicher, beispielsweise in den Rufnummernspeicher eines elektronischen Telefonbuchs. In diesem Fall ist der Parameter der Inhalt eines Rufnummernspeichers. Hierbei ist es besonders vorteilhaft, wenn die Spracherkennungseinrichtung durch Leitungsbelegung aktiviert wird, also durch Drücken einer eine Leitungsbelegung bewirkenden Taste an einem Mobil-Endgerät oder Schnurlos-Endgerät, durch Drücken der Freisprechtaste an einem Komforttelefon oder durch Abheben des Hörers und dadurch bedingtes Betätigen eines Gabelumschalters. Wird hierbei vor Eingabe einer Rufnummer ein spezieller Sprachbefehl eingegeben, so wird der Einstellmodus zum Hinzufügen einer Rufnummer in den Rufnummernspeicher aktiviert. Daraufhin wird die eingegebene Rufnummer als Parametereinstellung behandelt und in den Rufnummernspeicher gespeichert. Falls der spezielle Sprachbefehl nicht erkannt wird, wird eine eingegebene Rufnummer nicht gespeichert, sondern z.B. als Wahlinformation ausgegeben.

Ein weiterer Aspekt der Erfindung befaßt sich mit einem Verfahren zur Leitungsbelegung an einem Kommunikationsendgerät. Auch bei diesem Verfahren wird eine Spracherkennungseinrichtung zum Erkennen eines Sprachbefehls aktiviert, ein Sprachbefehl wird durch eine Bedienperson eingegeben und dessen Übereinstimmung mit einem einer Leitungsbelegung zugeordneten Sprachbefehl wird durch die Spracherkennungseinrichtung ermittelt. Falls der eingegebene Sprachbefehl mit dem für eine Leitungsbelegung vorgesehenen Sprachbefehl übereinstimmt, wird die Leitung belegt. Dieses Verfahren ermöglicht es, vollkommen freihändig zu telefonieren. Es empfiehlt sich vor allem bei Verwendung einer Freisprecheinrichtung oder bei Verwendung einer am Kopf getragenen Hor-Sprechgarnitur. Wenn dieses Verfahren fur abgehende Rufe verwendet werden soll, ist es empfehlenswert, die Spracherkennungseinrichtung zu Beginn einer Telefonsitzung beispielsweise durch Betätigen einer Taste am Endgerät zu aktivieren. Ein Deaktivieren der Spracherkennungseinrichtung kann dann beispielsweise durch erneutes Betätigen derselben Taste, durch Betätigen einer anderen Taste oder Tastenkombination oder automatisch in Abhängigkeit von der nach dem letzten Benutzen des Endgeräts verstrichenen Zeitspanne erfolgen. Es kann aber auch die Eingabe eines einen Abbruch bewirkenden Sprachbefehls zum Ausschalten der Spracherkennungseinrichtung vorgesehen sein.

Wird das zuletzt beschriebene Verfahren zur Leitungsbelegung bei kommendem Ruf verwendet, so ist in einer bevorzugten Ausgestaltungsform das Aktivieren der Spracherkennungseinrichtung an die Signalisierung eines kommenden Rufes gekoppelt. Wenn die Spracherkennungseinrichtung bei kommendem Ruf automatisch aktiviert wird, kann eine Bedienperson durch Eingabe eines hierfür vorgesehenen Sprachbefehls, wie z.B. "Belegen", eine Leitungsbelegung bewirken. In einer Weiterbildung des genannten Verfahrens wird die Spracherkennungseinrichtung nur während der Rufpausen aktiviert. Dadurch wird das unnötige Vergleichen des Tonrufsignals mit irgendwelchen Referenzmustern von Sprachbefehlen vermieden.

Ein weiterer Erfindungsaspekt betrifft ein Verfahren zum Anmelden eines mobilen Kommunikationsendgerätes wie z.B. eines Schnurlos-Endgerätes gemäß DECT an einer Basisstation einer Kommunikationsanlage. Bei diesem Verfahren wird eine Spracherkennungseinrichtung aktiviert zum Umsetzen akustischer Signale in eine Datenfolge und zum Erkennen einer Übereinstimmung mindestens eines Teiles dieser Datenfolge mit mindestens einem einen bestimmten Sprachbefehl entsprechenden Referenzmuster. Diese Aktivierung kann in einer gunstigen Ausgestaltungsform des Verfahrens durch Leitungsbelegung erfolgen.

Bei aktivierter Spracherkennungseinrichtung gibt eine Bedienperson einen Sprachbefehl ein und die Spracherkennungseinrichtung ermittelt die Übereinstimmung dieses Sprachbefehls mit einem zum Einleiten eines Anmeldevorgangs zugeordneten Sprachbefehl. Wird hierbei eine Übereinstimmung ermittelt, so leitet eine Steuereinrichtung einen Anmeldeablauf ein.

Durch dieses letztgenannte Verfahren wird insbesondere das Anmelden von mobilen Endgeräten unterschiedlicher Typen bzw. unterschiedlicher Hersteller an einer Kommunikationsanlage vereinheitlicht, da keine endgerätespezifischen Einleitungsprozeduren für einen Anneldevorgang eingegeben werden mussen.

Nachstehend wird die Erfindung anhand eines bevorzugten Ausführungsbeispiels unter Bezugnahme auf in den Figuren gezeigte Endgeräte näher erläutert. Hierbei zeigt:
- Fig. 1: das Blockschaltbild eines Endgerätes zur Durchführung eines der erfindungsgemäßen Verfahren mit digitaler Signalübertragung und
- Fig. 2: das Blockschaltbild eines Endgerätes zur Durchfuhrung eines der erfindungs gemaßen Verfahren mit analoger Signalübertragung,
- Fig. 3: ein Ablaufdiagramm eines Verfahrens zur Parametereinstellung und
- Fig. 4: ein Ablaufdiagramm eines Verfahrens zur Spracheingabe.

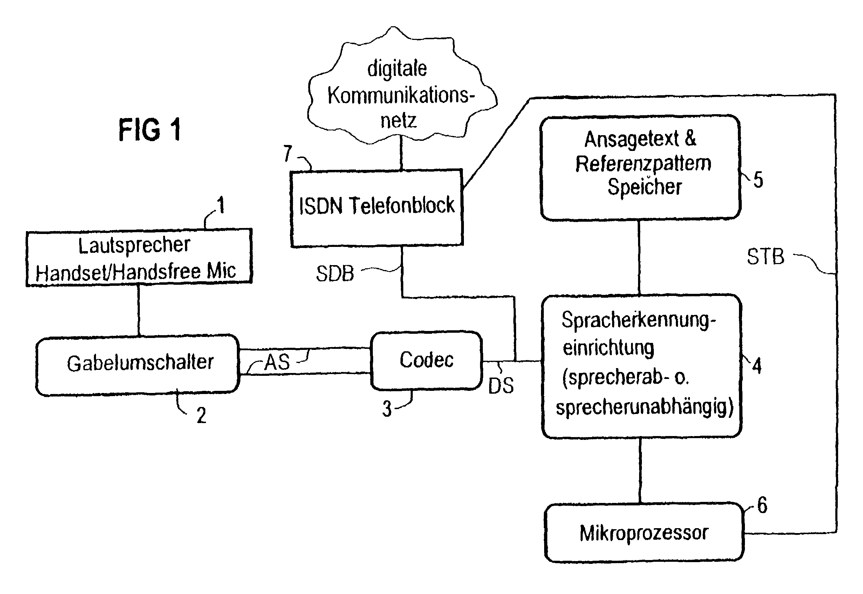

Fig. 1 zeigt das Blockschaltbild eines Endgerätes zur Durchführung der genannten erfindungsgemäßen Verfahren mit digitaler Signalübertragung wie z.B. ISDN. Dieses Endgerät enthält eine Elektroakustikwandlereinheit 1 zum Umwandeln von Akustiksignalen in analoge elektrische Sprachsignale und zum Umwandeln von analogen elektrischen Sprachsignalen in akustische Signale. Diese Elektroakustikwandiereinheit 1 kann beispielsweise ein Handapparat sein, eine am Kopf getragene Hör-Sprechgarnitur oder das Mikrofon und der Lautsprecher eines Freisprechtelefons. Diese Elektroakustikwandlereinheit 1 ist im dargestellten Ausführungsbeispiel über einen Gabelumschalter 2 mit einer Codier-/Decodiereinrichtung 3 gekoppelt. In dieser Codier-/Decodiereinrichtung werden vom Elektroakustikwandler 1 kommende Analogsignale (Sprache) AS in Digitalsignale umgewandelt und zum Elektroakustikwandler 1 gehende digitale Signale DS in Analogsignale umgewandelt. Der Digitalsignalein-/ausgang der Codier-/Decodiereinrichtung 3 ist mit einer Spracherkennungseinrichtung 4 verbunden. Die Spracherkennungseinrichtung 4 ist mit einer Speichereinrichtung 5 zum Speichern von Ansagetexten und/oder Referenzmustern gekoppelt und außerdem mit einer Steuereinrichtung 6, beispielsweise einem Mikroprozessor.

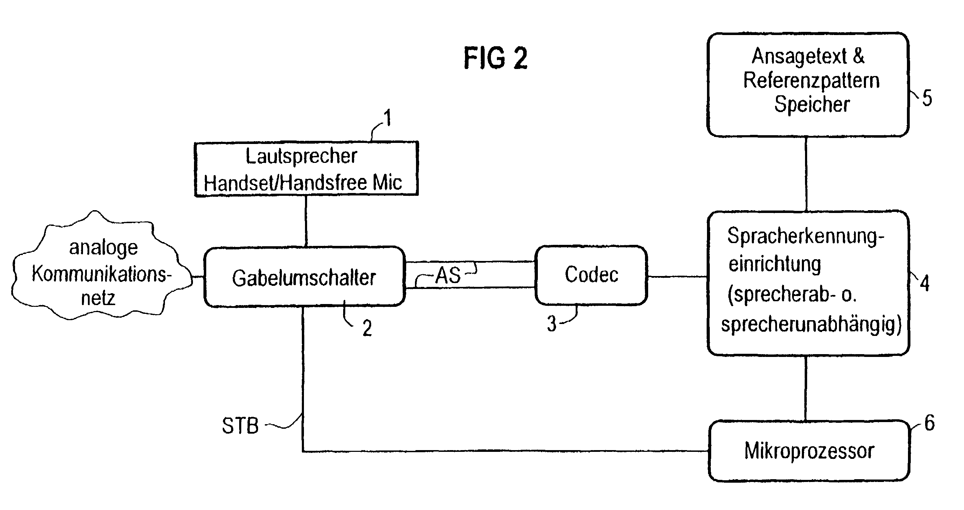

Die unter Bezugnahme auf Fig. 1 beschriebenen Funktionsblöcke 1 bis 6 und deren beschriebene Wirkung sind identisch in dem Endgerät für analoge Signalubertragung gemäß Fig. 2 vorgesehen.

Für die digitale Signalübertragung enthält das Endgerät gemäß Fig. 1 zusätzlich einen ISDN-Telefonblock 7, der über einen Sprachdatenbus SDB mit dem Ein-/Ausgang für digitale Signale der Codier-/Decodiereinrichtung 3 sowie mit der Spracherkennungseinrichtung 4 verbunden ist. Außerdem ist der ISDN-Telefonblock 7 über einen Steuerbus STB, beispielsweise zur Übertragung der Ruferkennung, mit der Steuereinrichtung 6 verbunden. Der ISDN-Telefonblock 7 hat eine Schnittstelle zu einem digitalen Kommunikationsnetz. Die Steuereinrichtung 6 erfaßt unter anderem den Zustand des Gabelumschalters 2.

Das Endgerät für analoge Signalübertragung gemäß Fig. 2 enthält keinen ISDN-Telefonblock 7. Dafür ist der Gabelumschalter 2 nicht nur zur Überwachung seines Zustandes, sondern u.a. auch zur analogen Ruferkennung über den Steuerbus STB mit der Steuereinrichtung 6 verbunden. Außerdem ist der Gabelumschalter 2 über eine Schnittstelle mit einem analogen Kommunikationsnetz verbunden.

Bei einer Ausführungsform des Verfahrens zum Einstellen von endgerätespezifischen Parametern eines Kommunikationsendgeräts wird die Spracherkennungseinrichtung 4 zum Umsetzen akustischer Signale in eine Datenfolge, zum Extrahieren relevanter Sprachparameter aus dieser Datenfolge, zum Vergleichen dieser Sprachparameter mit Referenzmustern und zum Ermitteln der Übereinstimmung eines eingegebenen Sprachbefehls mit einem Sprachbefehl, dessen Referenzmuster gespeichert sind, aktiviert.

Nach Aktivieren der Spracherkennungseinrichtung 4 gibt eine Bedienperson über den Elektroakustikwandler 1 einen akustischen Sprachbefehl ein. Dieser Sprachbefehl wird im Elektroakustikwandler 1 in ein analoges elektrisches Signal umgesetzt und über den Gabelumschalter 2 an die Codier-/Decodiereinrichtung 3 geschaltet. In einer günstigen Ausgestaltungsform ist in diesem Signalpfad eine nicht dargestellte Verstärkerkette enthalten.

In der Codier-/Decodiereinrichtung 3 wird das analoge elektrische Signal in ein Digitalsignal umgesetzt und als Datenfolge der Spracherkennungseinrichtung 4 zugefügt. Die Spracherkennungseinrichtung 4 extrahiert aus der Datenfolge spezifische Muster und vergleicht diese Muster mit in der Speichereinrichtung 5 gespeicherten Referenzmustern. Abhängig von diesem Vergleichsvorgang stellt die Spracherkennungseinrichtung eine Ubereinstimmung eines eingegebenen Sprachbefehls mit einem zum Aktivieren des Einstellmodus für einen bestimmten endgerätespezifischen Parameter vorgesehenen Sprachbefehl fest und gibt eine entsprechende Meldung an die Steuereinrichtung 6. Die Steuereinrichtung aktiviert bei vorliegender Übereinstimmung den Einstellmodus für den entsprechenden Parameter und veranlaßt die Ausgabe einer in der Speichereinrichtung 5 gespeicherten Sprachphrase über den Codierer-/Decodierer 3 und den Gabelumschalter 2 an den Lautsprecher des Elektroakustikwandlers 1. Dieser Text enthält entweder einen Hinweis über den aktivierten Einstellmodus oder eine Aufforderung zur Eingabe einer gewünschten Parametereinstellung. Daraufhin gibt die Bedienperson eine gewunschte Parametereinstellung per Spracheingabe ein, die dann über die Elektroakustikwandlereinrichtung 1 und die Codier-/Decodiereinrichtung 3 an die Spracherkennungseinrichtung 4 und daraufhin an die Steuereinrichtung 6 geleitet wird. Alternativ kann die gewünschte Parametereinstellung auch über eine nicht dargestellte Tastatur eingegeben werden und an die Steuereinrichtung 6 geleitet werden. Die Steuereinrichtung 6 stellt dann die gewünschte Parametereinstellung für das Endgerät ein. Zum Deaktivieren des Einstellmodus gibt die Bedienperson einen Endebefehl ein. Dieser Endebefehl kann beispielsweise durch Spracheingabe über den Elektroakustikwandler 1, die Codier-/ Decodiereinrichtung 3, die Spracherkennungseinrichtung 4 und die Steuereinrichtung 6 erfolgen oder durch Betätigen mindestens einer Taste am Endgerät.

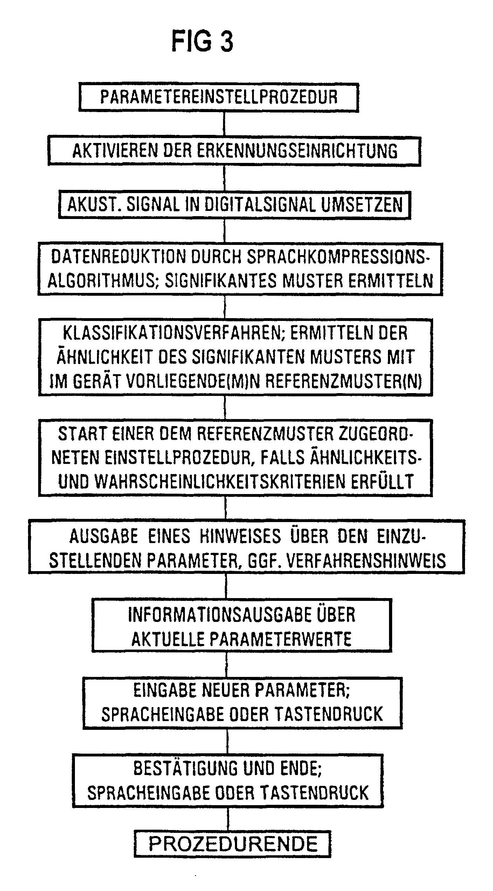

Fig. 3 zeigt ein Ablaufdiagramm einer Prozedur zur Parametereinstellung. Hierbei wird zuerst, beispielsweise durch Tastendruck, Betätigen des Gabelumschalters oder ein Triggersignal eines Schwellenkomparators, eine Erkennungseinrichtung zum Umsetzen akustischer Signale in eine Datenfolge und zum Erkennen einer Übereinstimmung mindestens eines Teiles dieser Datenfolge mit mindestens einem einem bestimmten Sprachbefehl entsprechenden Referenzmuster aktiviert. Daraufhin wird ein akustisches Signal durch elektroakustische Umformung und durch Analog/Digitalwandlung in ein digitales elektrisches Akustiksignal umgesetzt. In einem nächsten Schritt wird das transformierte Signal mit Hilfe eines geeigneten Sprachkompressionsalgorithmus einem Datenreduktionsverfahren unterzogen, um ein signifikantes Signalmuster zu erhalten. In einem darauffolgenden Klassifikationsverfahrensschritt wird die Ähnlichkeit dieses signifikanten Musters mit im Gerat hinterlegten Referenzmustern überprüft. Liegt keine Ähnlichkeit vor, so ist der Ablauf zu Ende (nicht dargestellt). Wenn, gegebenenfalls unter Berücksichtigung von Wahrscheinlichkeitskriterien, eine Ähnlichkeit zwischen dem aktuellen Muster und einem hinterlegten Muster festgestellt wird, wird in einem nachfolgenden Schritt eine diesem hinterlegten Muster zugeordnete Einstellprozedur für einen ausgewählten Parameter gestartet. In einem nächsten Schritt wird ein Hinweis über den ausgewählten Parameter ausgegeben. Außerdem wird eine Information über die aktuellen Parameterwerte ausgegeben. In einem nächsten Schritt erfolgt eine Eingabe neuer Parameter. Dies kann durch Spracheingabe oder per Tastendruck geschehen.

Zum Beenden der Eingabe eines Parameterwertes bzw. zum Bestätigen eines angezeigten Parameterwertes wird ein Bestäcigungsverfahrensschritt ausgeführt. Auch dieser kann per Spracheingabe oder Tastendruck erfolgen. Mit dem Abarbeiten der Bestätigungseingabe ist die Prozedur der Parametereinstellung beendet.

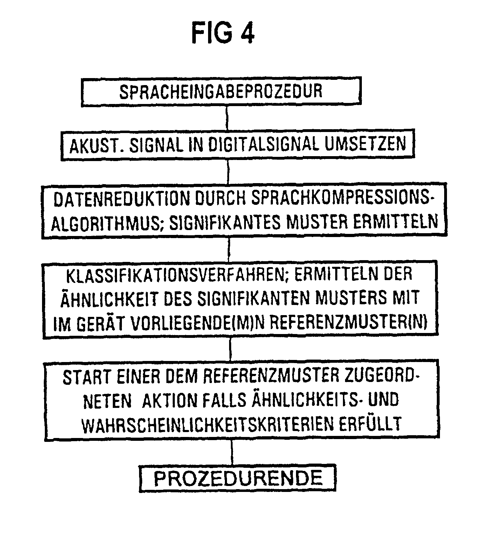

Fig. 4 zeigt das Ablaufdiagramm eines Ausführungsbeispiels für eine Spracheingabe. In einem ersten Schritt wird hierbei eine akustische Information eingegeben, in einem elektroakustischen Wandler in ein elektrisches Signal umgesetzt und durch Analog/Digitalwandlung in ein digitales akustisches Signal umgesetzt. In einem nächsten Schritt erfolgt die Datenreduktion des transformierten akustischen Signals mit Hilfe eines geeigneten Sprachkompressionsalgorithmus und es wird ein signifikantes Muster des akustischen Signals ermittelt. In einem darauffolgenden Klassifikationsverfahrensschritt wird die Ähnlichkeit des erhaltenen signifikanten Musters mit mindestens einem im Gerät hinterlegten Referenzmuster ermittelt.

Wird, gegebenenfalls unter Berücksichtigung von Wahrscheinlichkeitskriterien, keine Ähnlichkeit festgestellt, so ist das Verfahren beendet. Wird eine Ähnlichkeit des aktuellen signifikanten Musters mit einem hinterlegten Referenzmuster festgestellt, so wird eine diesem Referenzmuster zugeordnete Aktion gestartet. Damit ist dieses Spracheingabeverfahren beendet.

## Patentansprüche

1. Verfahren zum Einstellen von endgerätespezifischen Parametern eines Kommunikationsendgeräts, mit den Schritten
a) Aktivieren einer Spracherkennungseinrichtung (4) zum Umsetzen akustischer Signale in eine Datenfolge und zum Erkennen einer Übereinstimmung mindestens eines Teils dieser Datenfolge mit mindestens einem einem bestimmten Sprachbefehl entsprechenden Referenzmuster (5);
b) Eingabe eines Sprachbefehls durch eine Bedienperson und Ermitteln der Übereinstimmung dieses Sprachbefehls mit einem einem bestimmten, endgerätespezifischen Parameter zugeordneten Sprachbefehl durch die Spracherkennungseinrichtung (4);
c) falls Übereinstimmung zwischen dem eingegebenen Sprachbefehl und dem dem bestimmten Parameter zugeordneten Sprachbefehl ermittelt wird, Aktivieren eines Einstellmodus für diesen Parameter durch eine Steuereinrichtung (6);
d) Abgeben eines wahrnehmbaren Hinweises über den aktivierten Einstellmodus und/oder Abgeben einer wahrnehmbaren Aufforderung zur Eingabe einer gewünschten Parametereinstellung durch das Endgerät;
e) Eingabe einer gewünschten Parametereinstellung durch die Bedienperson und Einstellen durch die Steuereinrichtung (6).

2. Verfahren nach Anspruch 1, **dadurch gekennzeichnet, daß** das Aktivieren der Spracherkennungseinrichtung (4) durch Betätigen mindestens einer Taste an dem Endgerät erfolgt.

3. Verfahren nach Anspruch 1, **dadurch gekennzeichnet, daß** die Spracherkennungseinrichtung (4) durch Erreichen eines bestimmten vermittlungstechnischen Zustands des Endgeräts aktiviert wird.

4. Verfahren nach einem der vorhergehenden Ansprüche, **dadurch gekennzeichnet, daß** das Endgerät vor der Eingabe des Sprachbefehls einen wahrnehmbaren Hinweis über einen bestimmten, endgerätespezifischen Parameter abgibt, dessen Einstellmodus durch Eingabe eines ersten, bestimmten Sprachbefehls aktivierbar ist.

5. Verfahren nach Anspruch 4, **dadurch gekennzeichnet, daß** das Endgerät abhängig von der Eingabe eines zweiten bestimmten Sprachbefehls einen wahrnehmbaren Hinweis über einen anderen bestimmten, endgerätespezifischen Parameter abgibt, dessen Einstellmodus durch Eingabe des ersten bestimmten Sprachbefehls aktivierbar ist.

6. Verfahren nach einem der Ansprüche 1 bis 3, **dadurch gekennzeichnet, daß** das Endgerät vor Eingabe des Sprachbefehls einen wahrnehmbaren Hinweis über mehrere bestimmte, endgerätespezifische Parameter abgibt sowie über diesen Parametern jeweils zugeordnete Sprachbefehle, durch deren Eingabe jeweils der Einstellmodus für den zugeordneten Parameter aktivierbar ist.

7. Verfahren nach einem der Ansprüche 1 bis 6, **dadurch gekennzeichnet, daß** die Eingabe der gewünschten Parametereinstellung mit Hilfe einer Tastatur am Endgerät erfolgt.

8. Verfahren nach einem der Ansprüche 1 bis 6, **dadurch gekennzeichnet, daß** die Eingabe der gewünschten Parametereinstellung durch Eingabe eines Sprachbefehls erfolgt.

9. Verfahren nach Anspruch 7 oder 8, **dadurch gekennzeichnet, daß** die Steuereinrichtung (6) eine eingegebene Parametereinstellung nach Eingabe eines Endebefehls einstellt.

10. Verfahren nach Anspruch 9, **dadurch gekennzeichnet, daß** der Endebefehl durch Betätigen einer bestimmten Taste am Endgerät eingegeben wird.

11. Verfahren nach Anspruch 9, **dadurch gekennzeichnet, daß** der Endebefehl durch Eingabe eines bestimmten Sprachbefehls eingegeben wird.

12. Verfahren nach einem der vorhergehenden Ansprüche, **dadurch gekennzeichnet, daß** der einstellbare Parameter der Kontrast einer Anzeigeeinheit des Endgeräts ist.

13. Verfahren nach Anspruch 12, **dadurch gekennzeichnet, daß** die eingebbare Parametereinstellung eine von mehreren Kontraststufen ist.

14. Verfahren nach einem der Ansprüche 1 bis 11, **dadurch gekennzeichnet, daß** der einstellbare Parameter die Lautstärke des Tonrufs ist.

15. Verfahren nach einem der Ansprüche 1 bis 11, **dadurch gekennzeichnet, daß** der einstellbare Parameter die Melodie des Tonrufs ist.

16. Verfahren nach einem der Ansprüche 1 bis 11, **dadurch gekennzeichnet, daß** der einstellbare Parameter das Wahlverfahren ist.

17. Verfahren nach einem der Ansprüche 1 bis 11, **dadurch gekennzeichnet, daß** der einstellbare endgerätespezifische Parameter die Zuordnung des Endgerätes zu einem Teilnehmer ist, wobei die gewünschte Parametereinstellung durch Eingabe einer persönlichen Identifikationsnummer des Teilnehmers erfolgt, dem das Endgerät zugeordnet werden soll.

18. Verfahren nach Anspruch 1, 3, 7, 8, 9, 10 oder 11, **dadurch gekennzeichnet, daß** der einstellbare endgerätespezifische Parameter der Inhalt eines Rufnummernspeichers ist, daß die Spracherkennungseinrichtung (4) durch Leitungsbelegung aktiviert wird, daß der Einstellmodus zum Hinzufügen einer Rufnummer in den Rufnummernspeicher durch Eingabe eines speziellen Sprachbefehls aktiviert wird und daß eine eingegebene Rufnummer als Parametereinstellung angesehen wird und in den Rufnummernspeicher eingespeichert wird, falls der spezifische Sprachbefehl vor dem Eingeben der Rufnummer erfolgt ist.

19. Verfahren nach einem der Ansprüche 1 bis 18, **dadurch gekennzeichnet, daß** das Endgerät wahrnehmbare Hinweise oder Aufforderungen visuell mit Hilfe einer Anzeigeeinrichtung abgibt.

20. Verfahren nach einem der Ansprüche 1 bis 18, **dadurch gekennzeichnet, daß** das Endgerät wahrnehmbare Hinweise oder Aufforderungen akustisch durch Wiedergabe gespeicherter Sprachphrasen abgibt.

21. Verfahren nach Anspruch 20, **dadurch gekennzeichnet, daß** die Sprachphrasen im Endgerät gespeichert sind.

22. Verfahren nach Anspruch 3, **dadurch gekennzeichnet, daß** die Spracherkennungseinrichtung (4) bei kommendem Ruf automatisch aktiviert wird.

23. Verfahren nach Anspruch 22, **dadurch gekennzeichnet, daß** die Spracherkennungseinrichtung (4) während der Rufpausen aktiviert wird.

24. Verfahren zum Anmelden eines mobilen Kommunikationsendgeräts an einer Basisstation einer Kommunikationsanlage, mit den Schritten:
a) Aktivieren einer Spracherkennungseinrichtung (4) zum Umsetzen akustischer Signale in eine Datenfolge und zum Erkennen einer Übereinstimmung mindestens eines Teils dieser Datenfolge mit mindestens einem einem bestimmten Sprachbefehl entsprechenden Referenzmuster (5) ;
b) Eingabe eines Sprachbefehls durch eine Bedienperson und Ermitteln der Übereinstimmung dieses Sprachbefehls mit einem dem Einleiten eines Anmeldevorgangs zugeordneten Sprachbefehl durch die Spracherkennungseinrichtung (4);
c) Einleiten eines Anmeldeablaufs durch eine Steuereinrichtung (6) des Endgerätes, falls Übereinstimmung zwischen dem eingegebenen Sprachbefehl und dem dem Einleiten eines Anmeldevorgangs zugeordneten Sprachbefehl ermittelt wird.

25. Verfahren nach Anspruch 24, **dadurch gekennzeichnet, daß** die Spracherkennungseinrichtung (4) durch Leitungsbelegung aktiviert wird.

## Claims

1. Method for setting terminal-specific parameters for a communication terminal, having the following steps:
a) a voice recognition device (4) is activated for converting audible signals into a data sequence and for detecting a match between at least part of this data sequence and at least one reference pattern (5) corresponding to a particular voice command;
b) a voice command is entered by an operator, and the voice recognition device (4) ascertains the match between this voice command and a voice command associated with a particular, terminal-specific parameter;
c) if a match is ascertained between the entered voice command and the voice command associated with the particular parameter, a setting mode is activated for this parameter by a control device (6);
d) the terminal outputs perceptible advice relating to the activated setting mode and/or outputs a perceptible request for entry of a desired parameter setting;
e) a desired parameter setting is entered by the operator, and the control device (6) makes the setting.

2. Method according to Claim 1, **characterized in that** the voice recognition device (4) is activated by pressing at least one key on the terminal.

3. Method according to Claim 1, **characterized in that** the voice recognition device (4) is activated by reaching a particular call-processing state of the terminal.

4. Method according to one of the preceding claims, **characterized in that**, before the voice command is entered, the terminal outputs perceptible advice relating to a particular, terminal-specific parameter whose setting mode can be activated by entering a first, particular voice command.

5. Method according to Claim 4, **characterized in that**, on the basis of the entry of a second particular voice command, the terminal outputs perceptible advice relating to another particular, terminal-specific parameter whose setting mode can be activated by entering the first particular voice command.

6. Method according to one of Claims 1 to 3, **characterized in that**, before the voice command is entered, the terminal outputs perceptible advice relating to a plurality of particular, terminal-specific parameters and also relating to voice commands which are respectively associated with these parameters and whose entry can activate the respective setting mode for the associated parameter.

7. Method according to one of Claims 1 to 6, **characterized in that** the desired parameter setting is entered using a keypad on the terminal.

8. Method according to one of Claims 1 to 6, **characterized in that** the desired parameter setting is entered by entering a voice command.

9. Method according to Claim 7 or 8, **characterized in that** the control device (6) sets an entered parameter setting after an end command has been entered.

10. Method according to Claim 9, **characterized in that** the end command is entered by pressing a particular key on the terminal.

11. Method according to Claim 9, **characterized in that** the end command is entered by entering a particular voice command.

12. Method according to one of the preceding claims, **characterized in that** the settable parameter is the contrast for a display unit of the terminal.

13. Method according to Claim 12, **characterized in that** the parameter setting which can be entered is one of a plurality of contrast stages.

14. Method according to one of Claims 1 to 11, **characterized in that** the settable parameter is the volume of the ringer.

15. Method according to one of Claims 1 to 11, **characterized in that** the settable parameter is the melody of the ringer.

16. Method according to one of Claims 1 to 11, **characterized in that** the settable parameter is the dialling method.

17. Method according to one of Claims 1 to 11, **characterized in that** the settable terminal-specific parameter is the association of the terminal with a subscriber, the desired parameter being set by entry of a personal identification number for the subscriber with whom the terminal is to be associated.

18. Method according to Claim 1, 3, 7, 8, 9, 10 or 11, **characterized in that** the settable terminal-specific parameter is the content of a call number memory, **in that** the voice recognition device (4) is activated by circuit occupancy, **in that** the setting mode is activated for adding a call number to the call number memory by entering a specific voice command, and **in that** an entered call number is regarded as a parameter setting and is stored in the call number memory if the specific voice command has come before entry of the call number.

19. Method according to one of Claims 1 to 18, **characterized in that** the terminal outputs perceptible advice or requests visually using a display device.

20. Method according to one of Claims 1 to 18, **characterized in that** the terminal outputs perceptible advice or requests audibly by reproducing stored voice phrases.

21. Method according to Claim 20, **characterized in that** the voice phrases are stored in the terminal.

22. Method according to Claim 3, **characterized in that** the voice recognition device (4) is activated automatically when a call is arriving.

23. Method according to Claim 22, **characterized in that** the voice recognition device (4) is activated during the ringing pauses.

24. Method for registering a mobile communication terminal at a base station of a communications installation, having the following steps:
a) a voice recognition device (4) is activated for converting audible signals into a data sequence and for detecting a match between at least part of this data sequence and at least one reference pattern (5) corresponding to a particular voice command;
b) a voice command is entered by an operator, and the voice recognition device (4) ascertains the match between this voice command and a voice command associated with initiation of a registering operation;
c) a registering operation is initiated by a control device (6) of the terminal if a match is ascertained between the entered voice command and the voice command associated with initiation of a registering operation.

25. Method according to Claim 24, **characterized in that** the voice recognition device (4) is activated by circuit occupancy.

## Revendications

1. Procédé pour le réglage de paramètres spécifiques d'un terminal de communication comportant les étapes suivantes :
a) activation d'un système de reconnaissance de la parole (4) pour la conversion de signaux acoustiques en une séquence de données et pour la détection d'une coïncidence entre au moins une partie de cette séquence de données et au moins un modèle de référence (5) correspondant à un ordre vocal déterminé ;
b) entrée d'un ordre vocal par un utilisateur et détermination, par le système de reconnaissance de la parole (4), de la coïncidence entre cet ordre vocal et un ordre vocal déterminé spécifique au terminal ;
c) s'il est constaté une coïncidence entre l'ordre vocal entré et l'ordre vocal associé au paramètre déterminé, activation d'un mode de réglage pour ce paramètre par un dispositif de commande (6) ;
d) délivrance, par le terminal, d'une indication perceptible sur le mode de réglage activé et/ou d'une incitation perceptible à entrer un réglage de paramètre souhaité ;
e) entrée d'un réglage de paramètre souhaité par l'utilisateur et réglage par le dispositif de commande (6).

2. Procédé selon la revendication 1, **caractérisé par le fait que** l'activation du système de reconnaissance de la parole (4) s'effectue par l'actionnement d'au moins une touche sur le terminal.

3. Procédé selon la revendication 1, **caractérisé par le fait que** le système de reconnaissance de la parole (4) est activé **par le fait qu'**un certain état technique de commutation du terminal est atteint.

4. Procédé selon l'une des revendications précédentes, **caractérisé par le fait que** le terminal avant l'entrée de l'ordre vocal délivre une indication perceptible sur un paramètre déterminé qui est spécifique au terminal et dont le mode de réglage peut être activé par l'entrée d'un premier ordre vocal déterminé.

5. Procédé selon la revendication 4, **caractérisé par le fait que** le terminal délivre en fonction de l'entrée d'un deuxième ordre vocal déterminé une indication perceptible sur un autre paramètre déterminé qui est spécifique au terminal et dont le mode de réglage peut être activé par l'entrée du premier ordre vocal déterminé.

6. Procédé selon l'une des revendications 1 à 3, **caractérisé par le fait que** le terminal avant l'entrée de l'ordre vocal délivre une indication perceptible sur plusieurs paramètres déterminés spécifiques au terminal ainsi que sur des ordres vocaux qui sont respectivement associés à ces paramètres et par l'entrée desquels le mode de réglage pour le paramètre associé peut être respectivement activé.

7. Procédé selon l'une des revendications 1 à 6, **caractérisé par le fait que** l'entrée du réglage de paramètre souhaité s'effectue à l'aide d'un clavier sur le terminal.

8. Procédé selon l'une des revendications 1 à 6, **caractérisé par le fait que** l'entrée du réglage de paramètre souhaité s'effectue par l'entrée d'un ordre vocal.

9. Procédé selon la revendication 7 ou 8, **caractérisé par le fait que** le dispositif de commande (6) règle un réglage de paramètre souhaité après l'entrée d'un ordre de fin.

10. Procédé selon la revendication 9, **caractérisé par le fait que** l'ordre de fin est entré par l'actionnement d'une touche déterminée sur le terminal.

11. Procédé selon la revendication 9, **caractérisé par le fait que** l'ordre de fin est entré par l'entrée d'un ordre vocal déterminé.

12. Procédé selon l'une des revendications précédentes, **caractérisé par le fait que** le paramètre réglable est le contraste de l'unité d'affichage du terminal.

13. Procédé selon la revendication 12, **caractérisé par le fait que** le réglage de paramètre pouvant être entré est un niveau parmi plusieurs niveaux de contraste.

14. Procédé selon l'une des revendications 1 à 11, **caractérisé par le fait que** le paramètre réglable est le volume de la sonnerie.

15. Procédé selon l'une des revendications 1 à 11, **caractérisé par le fait que** le paramètre réglable est la mélodie de la sonnerie.

16. Procédé selon l'une des revendications 1 à 11, **caractérisé par le fait que** le paramètre réglable est le procédé de numérotation.

17. Procédé selon l'une des revendications 1 à 11, **caractérisé par le fait que** le paramètre réglable spécifique au terminal est l'association du terminal à un abonné, le réglage de paramètre souhaité s'effectuant par l'entrée d'un numéro d'identification personnel de l'abonné auquel le terminal doit être associé.

18. Procédé selon la revendication 1, 3, 7, 8, 9, 10 ou 11, **caractérisé par le fait que** le paramètre réglable spécifique au terminal est le contenu d'une mémoire de numéros d'appel, que le système de reconnaissance de la parole (4) est activé par l'occupation de ligne, que le mode de réglage pour l'ajout d'un numéro d'appel dans la mémoire de numéros d'appel est activé par l'entrée d'un ordre vocal spécial et qu'un numéro d'appel entré est considéré comme réglage de paramètre et est mémorisé dans la mémoire de numéros d'appel si l'ordre vocal spécial est donné avant l'entrée du numéro d'appel.

19. Procédé selon l'une des revendications 1 à 18, **caractérisé par le fait que** le terminal délivre des indications ou incitations perceptibles visuellement à l'aide d'un dispositif d'affichage.

20. Procédé selon l'une des revendications 1 à 18, **caractérisé par le fait que** le terminal délivre des indications ou incitations perceptibles acoustiquement par la reproduction de phrases parlées mémorisées.

21. Procédé selon la revendication 20, **caractérisé par le fait que** les phrases parlées sont mémorisées dans le terminal.

22. Procédé selon la revendication 3, **caractérisé par le fait que** le système de reconnaissance de la parole (4) est activé automatiquement. lors d'un appel arrivant.

23. Procédé selon la revendication 22, **caractérisé par le fait que** le système de reconnaissance de la parole (4) est activé pendant les pauses entre appels.

24. Procédé pour l'annonce d'un terminal de communication mobile à une station de base d'une installation de communication, comportant les étapes suivantes :
a) activation d'un système de reconnaissance de la parole (4) pour la conversion de signaux acoustiques en une séquence de données et pour la détection d'une coïncidence entre au moins une partie de cette séquence de données et au moins un modèle de référence (5) correspondant à un ordre vocal déterminé ;
b) entrée d'un ordre vocal par un utilisateur et détermination, par le système de reconnaissance de la parole (4), de la coïncidence entre cet ordre vocal et un ordre vocal associé au déclenchement d'une opération d'annonce ;
c) déclenchement d'une procédure d'annonce par un dispositif de commande (6) du terminal si une coïncidence est déterminée entre l'ordre vocal entré et l'ordre vocal associé au déclenchement d'une opération d'annonce.

25. Procédé selon la revendication 24, **caractérisé par le fait que** le système de reconnaissance de la parole (4) est activé par une occupation de ligne.
